# EUROPÄISCHE PATENTSCHRIFT

(11) **EP 2 640 010 B1**
(45) Veröffentlichungstag und Bekanntmachung des Hinweises auf die Patenterteilung: **01.04.2020**
(21) Anmeldenummer: 13154093.2
(22) Anmeldetag: 05.02.2013
(51) Int. Cl.: H04L 12/40, H04L 12/12

(54) **Busankoppler für ein Busgerät eines Bussystems, Busgerät eines Bussystems sowie Bussystem**
Bus connector for a bus device, bus device for a bus system and bus system
Coupleur de bus pour un appareil de bus d'un système de bus, appareil de bus d'un système de bus et système de bus

(30) Priorität: 15.03.2012 DE 102012204075
(43) Veröffentlichungstag der Anmeldung: 18.09.2013
(73) Patentinhaber: Siemens Schweiz AG, 8047 Zürich (CH)
(72) Erfinder: Fichtner, Norbert, 84069 Schierling (DE)
(74) Vertreter: Maier, Daniel Oliver

(56) Entgegenhaltungen:
- EP-A2- 0 620 664
- DE-A1- 10 358 584
- US-A1- 2012 051 241

## Beschreibung

### Busankoppler für ein Busgerät eines Bussystems, Busgerät eines Bussystems sowie Bussystem

Die vorliegende Erfindung betrifft einen Busankoppler für ein Busgerät eines Bussystems der Gebäudeinstallationstechnik, wobei der Busankoppler zum Ankoppeln des Busgerätes an einen Bus des Bussystems ausgebildet ist und zumindest eine Funktionseinheit aufweist. Ferner betrifft die vorliegende Erfindung ein Busgerät eines Bussystems mit einem derartigen Busankoppler sowie ein Bussystem mit einem Busgerät mit einem derartigen Busankoppler.

Busgeräte in einem Bussystem verwenden in der Regel einen so genannten Busankoppler für die Ankopplung an den Bus des Bussystems. Der Busankoppler kann dabei insbesondere auch als reiner Transceiver beziehungsweise als Transceiverschaltung ausgestaltet sein. Auch kann ein Busankoppler eine Transceiverschaltung oder einen Transceiver enthalten. Im Folgenden wird der Begriff Busankoppler für alle möglichen Varianten als Sammelbegriff verwendet. Ein derartiger Busankoppler kann dabei als integrierte Schaltung ausgeführt sein. Auch ein konventionelles Schaltungslayout für einen derartigen Busankoppler ist denkbar. Der Busankoppler unterstützt alle Sende- und Empfangsfunktionen, die zum Betreiben des Busgerätes an einem Bus eines Bussystems nötig sind. Über den Bus wird das Busgerät sowohl mit elektrischer Energie versorgt als auch der Datenverkehr abgewickelt. Der Busankoppler nimmt dabei auch die Trennung der Datenübertragung von der Stromversorgung für das Busgerät vor. Der Busankoppler stellt auch für das Busgerät und für im Busgerät angeordnete Anwendungsmodule die Stromversorgung mit den zugehörigen Überwachungsfunktionen zur Verfügung. Auch können im Busankoppler darüber hinaus auch noch weitere Funktionen realisiert sein, die insbesondere für die Kommunikation des Busgerätes über den Bus nötig sind.

Einhergehend mit der hohen Funktionalitätsbandbreite eines Busankopplers bedeutet dies einen hohen Energieverbrauch. Je mehr Funktionseinheiten im Busankoppler vorhanden sind, desto höher ist der Energieverbrauch des Busankopplers. Energie wird dabei insbesondere auch dann verbraucht, wenn eine Funktionseinheit aktuell nicht benötigt wird. Dies stellt einen unnötigen Energieverbrauch dar. Ein derartiger Busankoppler für einen Einsatz in einem CAN-Bussystem ist aus der US 2012/0 051 241 A1 bekannt. Dieser Busankoppler weist dabei insbesondere mehrere Funktionseinheiten, beispielsweise zum Dekodieren von Bustelegrammen, auf. Ein weiterer Busankoppler, der für einen Einsatz in einem lokalen Rechnernetzwerk vorgesehen und ausgebildet ist, wird in der EP 0 620 664 A2 offenbart.

Es ist daher Aufgabe der vorliegenden Erfindung, die voranstehend beschriebenen Nachteile bekannter Busankoppler für ein Busgerät eines Bussystems, bekannter Busgeräte eines Bussystems und bekannter Bussysteme zumindest teilweise zu beheben. Insbesondere ist es Aufgabe der vorliegenden Erfindung, einen Busankoppler für ein Busgerät eines Bussystems, ein Busgerät eines Bussystems und ein Bussystem zu schaffen, die in kostengünstiger und einfacher Weise den Energieverbrauch beim Betrieb eines derartigen Busankopplers, eines Busgerätes beziehungsweise eines Bussystems senken.

Voranstehende Aufgabe wird gelöst durch einen Busankoppler für ein Busgerät eines Bussystems mit den Merkmalen des Anspruchs 1, durch ein Busgerät für ein Bussystem mit den Merkmalen des Anspruchs 9 sowie durch ein Bussystem mit den Merkmalen des Anspruchs 10. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Busankoppler für ein Busgerät eines Bussystems beschrieben sind, selbstverständlich auch im Zusammenhang mit dem Busgerät eines Bussystems sowie dem Bussystem und jeweils umgekehrt, so dass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch einen Busankoppler für ein Busgerät eines Bussystems der Gebäudeinstallationstechnik, wobei der Busankoppler zum Ankoppeln des Busgerätes an einem Bus des Bussystems ausgebildet ist und zumindest eine Funktionseinheit aufweist, gelöst. Insbesondere ist der erfindungsgemäße Busankoppler dadurch gekennzeichnet, dass der Busankoppler eine Aktivitätserkennungseinheit zum Erkennen eines Aktivitätszustandes auf den Bus des Bussystems und zur Ansteuerung der zumindest einen Funktionseinheit in Abhängigkeit des erkannten Aktivitätszustandes aufweist.

Ein Busankoppler im Sinne der Erfindung kann dabei ein reiner Transceiver und/oder eine Transceiverschaltung sein oder zumindest einen derartigen Transceiver und/oder eine Transceiverschaltung aufweisen. Ein Bussystem der Gebäudeinstallationstechnik kann dabei ein KNX-Bus oder ein anderes bekanntes Bussystem der Gebäudeinstallationstechnik sein. Der erfindungsgemäße Busankoppler kann ferner als integrierte Schaltung und/oder in konventioneller Bauweise, das heißt insbesondere als Schaltkreis, ausgeführt sein. Die Funktionseinheit im Sinne der Erfindung stellt dabei Funktionalitäten zur Verfügung, die beispielsweise zum Empfangen und/oder Senden eines Bustelegramms nötig sind. Auch das Empfangen und/oder Senden von Daten, die in einem Anwendungsmodul des Busgerätes erzeugt werden, kann durch eine Funktionseinheit als Funktionalität zur Verfügung gestellt werden. Funktionseinheiten im Sinne der Erfindung können ferner sowohl analoge als auch digitale Elektronik enthalten.

Durch die Aktivitätserkennungseinheit des Busankopplers kann ein Aktivitätszustand auf dem Bus des Bussystems erkannt werden. Eine Aktivität auf dem Bus kann beispielsweise ein Steuerimpuls für das Busgerät sein, in dem der Busankoppler verbaut ist. Ein anderes Beispiel für eine Aktivität auf dem Bus kann beispielsweise eine Anfrage nach Daten sein, die das Busgerät, in dem der Busankoppler verbaut ist, liefern soll. Wird durch die Aktivitätserkennungseinheit ein Aktivitätszustand auf dem Bus des Bussystems erkannt, kann die Aktivitätserkennungseinheit die zumindest eine Funktionseinheit ansteuern. Insbesondere ist die angesteuerte Funktionseinheit dabei natürlich notwendig, um den Anforderungen des erkannten Aktivitätszustandes auf dem Bus zu entsprechen. Funktionseinheiten im Busankoppler werden somit insbesondere nur dann angesteuert, wenn sie benötigt werden. Funktionseinheiten, die aktuell nicht benötigt werden, werden bevorzugt auch nicht angesteuert. Dadurch ergibt sich eine deutliche Energieeinsparung, da Funktionseinheiten nur bedarfsangepasst angesteuert werden können und somit auch nur dann Energie verbrauchen, wenn sie wirklich benötigt werden. Ein deutlich energiesparender und damit kostengünstigerer Betrieb eines mit einem erfindungsgemäßen Busankoppler bestückten Busgerätes für einen Bussystem ist somit möglich.

Ferner kann bei einem erfindungsgemäßen Busankoppler vorgesehen sein, dass die Aktivitätserkennungseinheit zum Erkennen des Aktivitätszustandes zum Erkennen einer Signalflanke, eines Pulses, einen Bytes und/oder eines Bustelegrammes ausgebildet ist. Insbesondere das Erkennen einer Flanke oder eines Pulses, wobei die Flanke insbesondere ein Teil eines Pulses sein kann, kann dabei besonders einfach realisiert werden und bedarf keiner komplizierten Elektronik. Die Aktivitätserkennungseinheit kann dadurch besonders einfach ausgebildet werden, wodurch sie insbesondere auch energiesparend ist. Ferner ist eine Flanken- beziehungsweise Pulserkennung ein besonders schnelles Erkennen eines Aktivitätszustandes auf dem Bus. Zusätzlich kann die Aktivitätserkennungseinheit zum Erkennen des Aktivitätszustandes auch zum Erkennen eines Bytes und/oder eines kompletten Bustelegrammes ausgebildet sein. Bereits ein Byte aber insbesondere ein Bustelegramm können Informationen darüber enthalten, welche Funktionseinheiten nötig sind. Das Erkennen eines Bytes und insbesondere eines Bustelegrammes geht langsamer vonstatten wie die Erkennung einer Flanke oder eines Pulses. Allerdings ist der Informationsgehalt deutlich höher. Dies kann zu einer noch gezielteren Ansteuerung der Funktionseinheiten verwendet werden. Besonders bevorzugt ist daher, dass die Aktivitätserkennungseinheit zum Erkennen sowohl einer Signalflanke und eines Pulses als auch eines Bytes oder eines Bustelegrammes ausgebildet ist. In einem derartigen Fall kann der Aktivitätszustand des Busses besonders schnell erkannt werden (Puls/Flanke) als auch mit hohem Informationsgehalt erkannt werden (Byte/Bustelegramm).

Darüber hinaus kann bei einem erfindungsgemäßen Busankoppler vorgesehen sein, dass der Busankoppler zu einem kontinuierlichen oder zumindest annähernd kontinuierlichen Erkennen des Aktivitätszustandes des Bussystems ausgebildet ist. Dabei bedeutet annähernd kontinuierlich im Sinne der Erfindung, dass die Überwachungsrate des Busankopplers höher ist als die Datenfrequenz auf dem Bus. Dadurch kann sichergestellt werden, dass eine ständige beziehungsweise quasi ständige Überwachung des Busses möglich ist. Eine Änderung des Aktivitätszustandes des Bussystems kann somit durch die Aktivitätserkennungseinheit des Busankopplers mit hoher Sicherheit bemerkt werden. Dadurch kann sichergestellt werden, dass ein Busgerät, das mit einem erfindungsgemäßen Busankoppler ausgestattet ist, zu jeder Zeit über den Bus des Bussystems angesprochen werden kann.

Besonders bevorzugt kann bei einem erfindungsgemäßen Busankoppler vorgesehen sein, dass der Busankoppler in Abhängigkeit des erkannten Aktivitätszustandes auf dem Bus zum Ein- oder Ausschalten der zumindest einen Funktionseinheit ausgebildet ist. Das Ein- oder Ausschalten stellt somit ein Ansteuern im Sinne der Erfindung dar. Auf diese Art und Weise ist es möglich, nur die Funktionseinheiten einzuschalten, die auch wirklich benötigt werden. Alle Funktionseinheiten, die aktuell nicht benötigt werden, können deaktiviert bleiben. Auch können beispielsweise Funktionseinheiten die bereits aktiviert sind, durch den Busankoppler deaktiviert werden, wenn der erkannte Aktivitätszustand auf den Bus keine Notwendigkeit für die jeweiligen Funktionseinheiten beinhaltet. Durch dieses aktivitätszustandsabhängige Ein- und Ausschalten der zumindest einen Funktionseinheit kann somit ein unnötiger Energieverbrauch vermieden werden. Diese Energieeinsparung bewirkt darüber hinaus auch eine Kosteneinsparung.

Ferner kann bei einem erfindungsgemäßen Busankoppler vorgesehen sein, dass die Aktivitätserkennungseinheit zur verzögerten Ansteuerung der zumindest einen Funktionseinheit ausgebildet ist. Dadurch kann sichergestellt werden, dass der zumindest einen Funktionseinheit ausreichend Zeit zur Verfügung gestellt werden kann, um Prozesse vollständig zu verarbeiten. Beispielsweise kann die Funktionseinheit, die zum Empfangen eines Bustelegrammes nötig ist, solange mit Energie versorgt werden, bis das Empfangen des Bustelegramms abgeschlossen ist, unabhängig davon, ob auf dem Bus noch ein entsprechender Aktivitätszustand vorherrscht oder nicht. Dadurch kann der funktionale Betrieb des mit einem erfindungsgemäßen Busankoppler versehenen Busgerätes sichergestellt werden.

Darüber hinaus kann bei einem erfindungsgemäßen Busankoppler vorgesehen sein, dass die Aktivitätserkennungseinheit zur Ansteuerung der zumindest einen Funktionseinheit in Abhängigkeit von einem Status der zumindest einen Funktionseinheit ausgebildet ist. Dadurch können beispielsweise Funktionseinheiten, die von einem im Busgerät verbauten Anwendungsmodul nicht unterstützt werden, von einer Ansteuerung ausgenommen werden. Die so unbenutzten Funktionseinheiten können mit einem Status versehen werden, der sie als nicht benötigt ausweist. Durch eine Verknüpfung dieses Status mit der Ansteuerung durch die Aktivitätserkennungseinheit kann so ein Ansteuern einer nicht benötigten Funktionseinheit sicher vermieden werden. Dabei kann das Verknüpfen des Status mit der Ansteuerung durch die Aktivitätserkennungseinheit beispielsweise direkt in einer Funktionseinheit oder in einer separaten Verknüpfungseinheit vorgenommen werden. Auch durch diese Maßnahme ergibt sich eine weitere Energieeinsparung, da nicht benötigte Funktionseinheiten von einer Ansteuerung ausgeschlossen werden können.

In einer Weiterentwicklung eines erfindungsgemäßen Busankopplers kann vorgesehen sein, dass der Busankoppler wenigstens eine Schnittstelle aufweist, über die der Status der zumindest einen Funktionseinheit veränderbar ist. Ein derartiger Busankoppler ist somit veränderbar und flexibel ausgebildet. Beispielsweise kann in einem Busgerät, in dem das Anwendungsmodul ausgetauscht wird, der Busankoppler auf dieses veränderte Anwendungsmodul angepasst werden. Ein Austausch des Busankopplers kann in einem derartigen Fall vermieden werden. Dies erlaubt eine besonders breite Einsetzbarkeit eines erfindungsgemäßen Busankopplers, da er an eine breite Palette von äußeren Gegebenheiten angepasst werden kann.

Darüber hinaus kann in einer Weiterentwicklung eines erfindungsgemäßen Busankopplers vorgesehen sein, dass die Schnittstelle zur Herstellung einer Verbindung zu einem Anwendungsmodul des Busgerätes oder zu einer externen Ansteuerungseinheit ausgebildet ist. Die Schnittstelle kann dabei die Verbindung zu einem Anwendungsmodul des Busgerätes herstellen. Aufgrund der Art des Anwendungsmoduls ist oftmals bereits vorbestimmt, welche Funktionseinheiten für eine Kommunikation des Anwendungsmoduls mit dem Bus des Bussystems nötig sind. Die entsprechenden Funktionseinheiten, das heißt insbesondere der Status der entsprechenden Funktionseinheiten, können in diesem Fall über die Schnittstelle derart verändert werden, dass sie durch die Aktivierungseinheit des Busankopplers angesteuert werden können. Selbstverständlich ist auch denkbar, dass die Schnittstelle zur Herstellung einer Verbindung zu einer externen Ansteuerungseinheit ausgebildet ist. In einem derartigen Fall kann der Status einer Funktionseinheit von außen verändert werden. Dies ist insbesondere dann von Vorteil, wenn beispielsweise ein eingesetztes Anwendungsmodul nicht selbstständig zum Verändern des Status einer Funktionseinheit ausgebildet ist. Darüber hinaus ist selbstverständlich auch eine Ausgestaltung der Schnittstelle derart denkbar, dass der Status einer Funktionseinheit über den Bus veränderbar ist. Insbesondere diese Ausgestaltungsform ermöglicht auch eine ferngesteuerte Veränderung des Status einer Funktionseinheit. Durch die Möglichkeit, den Status einer Funktionseinheit zu verändern, ist ein erfindungsgemäßer Busankoppler vielseitig veränderbar und dadurch besonders flexibel einsetzbar.

Gemäß einem zweiten Aspekt der Erfindung wird die Aufgabe durch ein Busgerät für ein Bussystem der Gebäudeinstallationstechnik, aufweisend zumindest einen Busankoppler und zumindest ein Anwendungsmodul, gelöst. Insbesondere ist das erfindungsgemäße Busgerät dadurch gekennzeichnet, dass der Busankoppler gemäß dem ersten Aspekt der Erfindung ausgestaltet ist. Sämtliche Vorteile, die in Verbindung mit einem erfindungsgemäßen Busankoppler beschrieben sind, gelten somit selbstverständlich auch für ein erfindungsgemäßes Busgerät für ein Bussystem, das einen derartigen Busankoppler aufweist.

Gemäß einem dritten Aspekt der Erfindung wird die Aufgabe durch ein Bussystem der Gebäudeinstallationstechnik, aufweisend einen Bus und wenigstens ein über einen Busankoppler an dem Bus angekoppeltes Busgerät, gelöst. Insbesondere ist dabei das wenigstens eine über einen Busankoppler an den Bus angekoppelte Busgerät gemäß dem zweiten Aspekt der Erfindung ausgebildet. Damit weist das wenigstens eine an den Bus angekoppelte Busgerät einen Busankoppler gemäß dem ersten Aspekt der Erfindung auf. Sämtliche Vorteile, die in Verbindung mit einem Busankoppler gemäß dem ersten Aspekt der Erfindung beziehungsweise in Verbindung mit einem Busgerät für ein Bussystem gemäß dem zweiten Aspekt der Erfindung beschrieben worden sind, gelten somit selbstverständlich auch für ein Bussystem der Gebäudeinstallationstechnik, das ein derartiges Busgerät für ein Bussystem der Gebäudeinstallationstechnik mit einem derartigen Busankoppler aufweist.

Die vorliegende Erfindung wird anhand der beigefügten Zeichnungsfiguren näher erläutert. Es zeigen schematisch:
- Fig. 1: eine Ansicht eines Bussystems der Gebäudeinstallationstechnik und
- Fig. 2: eine Teilansicht eines erfindungsgemäßen Busgerätes.

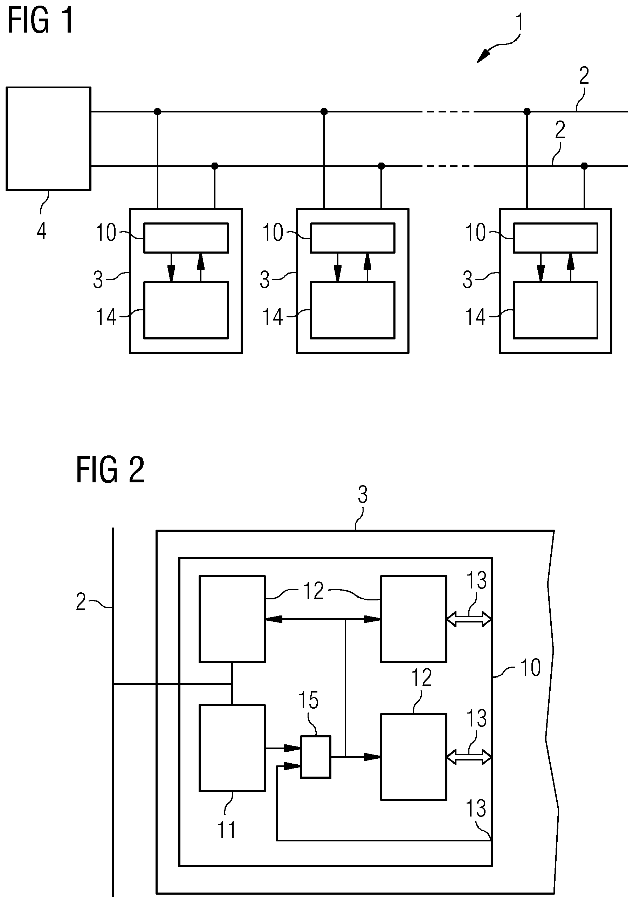

Elemente mit gleicher Funktion und Wirkungsweise sind in den Figuren 1 und 2 jeweils mit denselben Bezugszeichen versehen.

Fig. 1 zeigt eine schematische Ansicht eines erfindungsgemäßen Bussystems 1. Das Bussystem 1 weist dabei einen Bus 2 auf, der in der abgebildeten Ausgestaltungsform des Bussystems 1 als zweiadriger Bus 2 ausgeführt ist. Der Bus 2 wird dabei über eine Energieversorgung 4 mit elektrischer Energie versorgt. Am Bus 2 sind mehrere Busgeräte 3 angeordnet. Jedes der einzelnen Busgeräte 3 weist dabei einen Busankoppler 10 und ein Anwendungsmodul 14 auf. Der Busankoppler 10 eines jeden der Busgeräte 3 stellt dabei den Busgeräten 3 Funktionalitäten zur Verfügung, die eine Kommunikation des Busgerätes 3 mit und über den Bus 2 des Bussystems 1 ermöglichen. Die Busankoppler 10 können dabei auch als Transceiver und/oder als einfache Transceiverschaltung ausgestaltet sein oder einen Transceiver und/oder eine Transceiverschaltung aufweisen. Die Anwendungsmodule 14 können in den einzelnen Busgeräten 3 verschieden sein. Selbstverständlich können in einem Busgerät 3 auch zwei oder mehr Anwendungsmodule 14, insbesondere unterschiedliche, vorgesehen sein. Insbesondere kann ein Anwendungsmodul 14 dabei beispielsweise eine Sensoreinheit oder eine Aktoreinheit sein. Die verschiedenen Anwendungsmodule 14 und auch die verschiedenen Aktivitäten auf dem Bus 2 benötigen dabei verschiedene Funktionalitäten in den Busankopplern 10. Die Busankoppler 10 sind dafür erfindungsgemäß derart ausgestaltet, dass sie, basierend auf dem Aktivitätszustand auf dem Bus 2 nur diejenigen Funktionalitäten zur Verfügung stellen, die jeweilig benötigt werden. Durch das Vermeiden der Zurverfügungstellung von unbenötigten Funktionalitäten kann dabei Energie eingespart werden.

Fig. 2 zeigt eine schematische Teilansicht eines erfindungsgemäßen Busgerätes 3. Das Busgerät 3 ist dabei mit einem Bus 2 eines Bussystems 1 verbunden. Insbesondere ist das Busgerät 3 mit einem erfindungsgemäßen Busankoppler 10 ausgestattet.

Dabei weist der Busankoppler 10 eine Aktivitätserkennungseinheit 11 und mehrere Funktionseinheiten 12 auf. Diese Aktivitätserkennungseinheit 11 ist dazu ausgebildet, einen Aktivitätszustand auf dem Bus 2 zu erkennen. Abhängig von diesem erkannten Aktivitätszustand kann durch die Aktivitätserkennungseinheit 11 eine oder mehrere der Funktionseinheiten 12 angesteuert, das heißt insbesondere an- beziehungsweise ausgeschaltet, werden. Dadurch, dass die jeweilige Funktionseinheit 12 nur im Bedarfsfall angesteuert wird, kann ein unnötiger Energieverbrauch durch nicht benötigte, aber dennoch angesteuerte, Funktionseinheiten 12 vermieden werden. Über Schnittstellen 13 kann der Busankoppler 10 insbesondere mit einem oder mehreren Anwendungsmodulen 14 (nicht gezeigt) des Busgerätes 3 verbunden sein. Über diese Schnittstellen 13 kann der Status einer einzelnen Funktionseinheit 12 verändert werden. Insbesondere kann der Status einer Funktionseinheit 12 dahingehend verändert werden, dass die Funktionseinheit 12 auf keinen Fall aktiviert werden kann, insbesondere in dem Fall, wenn die Funktionseinheit 12 durch das Anwendungsmodul 14 nicht benötigt wird. Auch auf diese Weise kann eine unnötige Ansteuerung einer nicht benötigten Funktionseinheit 12 vermieden werden. Besonders bevorzugt ist ferner, dass die Veränderung im Status einer Funktionseinheit 12 in einer Verknüpfungseinheit 15 mit einem Ansteuerungssignal der Aktivitätserkennungseinheit 11 verknüpft wird. Nur wenn eine Übereinstimmung des Status einer Funktionseinheit 12 mit einer Ansteuerung durch die Aktivitätserkennungseinheit 11 vorliegt, wird die jeweilige Funktionseinheit 12 auch wirklich angesteuert. Dies stellt eine hohe Sicherheit dahingehend dar, dass eine Funktionseinheit 12 auch wirklich nur dann angesteuert wird, wenn sie auch wirklich benötigt ist. Nicht dargestellt ist, dass eine Schnittstelle 13 selbstverständlich auch mit einer externen Ansteuerungseinheit verbunden werden kann. Auf diese Weise kann der Status einer Funktionseinheit 12 auch von außerhalb des Busgerätes 3 verändert werden. Dies ist insbesondere dann von Vorteil, wenn eine Veränderung des Status einer Funktionseinheit 12 durch einen Austausch des verwendeten Anwendungsmoduls 14 im Busgerät 3 nötig ist, diese Veränderung aber vom verwendeten Anwendungsmoduls 14 nicht aktiv durchgeführt werden kann. Auch ist denkbar, dass eine Schnittstelle 13 vorgesehen ist (nicht mit abgebildet), die mit dem Bus 2 des Bussystems 1 verbunden werden kann, wodurch der Status einer Funktionseinheit 12 über den Bus 2 des Bussystems 1 verändert werden kann. Dies ermöglicht insbesondere eine ferngesteuerte Veränderung des Status einer Funktionseinheit 12.

Zusammenfassend lässt sich sagen, dass durch die bedarfsabhängige Ansteuerung der Funktionseinheiten im Busankoppler eines Busgerätes eine deutliche Energieeinsparung erreicht werden kann. Dies stellt, insbesondere in großen und weitläufigen Bussystemen der Gebäudeinstallationstechnik, auch einen deutlichen Kostenvorteil dar.

Die voranstehende Erläuterung der Ausführungsformen beschreibt die vorliegende Erfindung nur im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Bussystem
- 2: Bus
- 3: Busgerät
- 4: Energieversorgung

- 10: Busankoppler
- 11: Aktivitätserkennungseinheit
- 12: Funktionseinheit
- 13: Schnittstelle
- 14: Anwendungsmodul
- 15: Verknüpfungseinheit

## Patentansprüche

1. Bussystem (1) der Gebäudeinstallationstechnik, aufweisend einen Bus (2) und wenigstens ein über einen Busankoppler (10) an den Bus (2) angekoppeltes Busgerät (3),
das Busgerät (3) aufweisend zumindest den Busankoppler (10) und mindestens ein Anwendungsmodul (14),
wobei der Busankoppler (10) zum Ankoppeln des Busgerätes (3) an den Bus (2) des Bussystems (1) ausgebildet ist und mehrere Funktionseinheiten (12) aufweist,
wobei der Busankoppler (10) eine Aktivitätserkennungseinheit (11) zum Erkennen eines Aktivitätszustandes auf dem Bus (2) des Bussystems (1) und zur gezielteren Ansteuerung der Funktionseinheiten (12) in Abhängigkeit des erkannten Aktivitätszustandes aufweist,
**dadurch gekennzeichnet,**
**dass** die Aktivitätserkennungseinheit (11) zum Erkennen des Aktivitätszustandes zum Erkennen eines Bytes und/oder eines Bustelegramms ausgebildet ist, und wobei die Aktivitätserkennungseinheit (11) ausgebildet ist, die Funktionseinheiten (12) im Busankoppler (10) nur dann anzusteuern, wenn sie benötigt werden.

2. Bussystem (1) nach Anspruch 1,
**dadurch gekennzeichnet,**
**dass** die Aktivitätserkennungseinheit (11) zum Erkennen des Aktivitätszustandes zum Erkennen einer Signalflanke und/oder eines Pulses ausgebildet ist.

3. Bussystem (1) nach wenigstens einem der Ansprüche 1 oder 2,
**dadurch gekennzeichnet,**
**dass** der Busankoppler (10) zu einem kontinuierlichen oder zumindest annähernd kontinuierlichen Erkennen des Aktivitätszustandes des Bussystems (1) ausgebildet ist.

4. Bussystem (1) nach wenigstens einem der vorhergehenden Ansprüche,
**dadurch gekennzeichnet,**
**dass** der Busankoppler (10) in Abhängigkeit des erkannten Aktivitätszustandes auf dem Bus (2) zum Ein- oder Ausschalten der Funktionseinheiten (12) ausgebildet ist.

5. Bussystem (1) nach wenigstens einem der vorhergehenden Ansprüche,
**dadurch gekennzeichnet,**
**dass** die Aktivitätserkennungseinheit (11) zur verzögerten Ansteuerung der Funktionseinheiten (12) ausgebildet ist.

6. Bussystem (1) nach wenigstens einem der vorhergehenden Ansprüche,
**dadurch gekennzeichnet,**
**dass** die Aktivitätserkennungseinheit (11) zur Ansteuerung der Funktionseinheiten (12) in Abhängigkeit von einem Status der Funktionseinheiten (12) ausgebildet ist.

7. Bussystem (1) nach Anspruch 6,
**dadurch gekennzeichnet,**
**dass** der Busankoppler (10) wenigstens eine Schnittstelle (13) aufweist, über die der Status der Funktionseinheiten (12) veränderbar ist.

8. Bussystem (1) nach Anspruch 7,
**dadurch gekennzeichnet,**
**dass** die Schnittstelle (13) zur Herstellung einer Verbindung zu einem Anwendungsmodul (14) des Busgerätes (3) oder zu einer externen Ansteuerungseinheit ausgebildet ist.

## Claims

1. Bus system (1) in building installation technology,
having a bus (2) and at least one bus device (3) connected via a bus connecter (10) to the bus (2),
the bus device (3) having at least the bus connector (10) and at least one application module (14),
wherein the bus connector (10) is embodied to connect the bus device (3) to the bus (2) of the bus system (1) and has a number of functional units (12),
wherein the bus connector (10) has an activity identification unit (11) for identifying an activity state on the bus (2) of the bus system (1) and for the more targeted activation of the functional units (12) as a function of the identified activity state,
**characterised in that**
the activity identification unit (11) is embodied to identify the activity state for identifying a byte and/or a bus telegram, and wherein the activity identification unit (11) is embodied to activate the functional units (12) in the bus connector (10) only when they are required.

2. Bus system (1) according to claim 1,
**characterised in that**
the activity identification unit (11) is embodied to identify the activity state for identifying a signal edge and/or a pulse.

3. Bus system (1) according to at least one of claims 1 or 2,
**characterised in that**
the bus connector (10) is embodied to continuously or at least approximately continuously identify the activity state of the bus system (1).

4. Bus system (1) according to at least one of the preceding claims,
**characterised in that**
the bus connector (10) is embodied to switch the functional units (12) on or off as a function of the identified activity state on the bus (2).

5. Bus system (1) according to at least one of the preceding claims,
**characterised in that**
the activity identification unit (11) is embodied for the delayed activation of the functional units (12).

6. Bus system (1) according to at least one of the preceding claims,
**characterised in that**
the activity identification unit (11) is embodied to activate the functional units (12) as a function of a status of the functional units (12).

7. Bus system (1) according to claim 6,
**characterised in that**
the bus connector (10) has at least one interface (13), by way of which the status of the functional units (12) can be changed.

8. Bus system (1) according to claim 7,
**characterised in that**
the interface (13) is embodied to establish a connection with an application module (14) of the bus device (3) or with an external activation unit.

## Revendications

1. Système de bus (1) de la technique d'installation de bâtiment, présentant un bus (2) et au moins un appareil de bus (3) couplé au bus (2) par un coupleur de bus (10),
l'appareil de bus (3) présentant au moins le coupleur de bus (10) et au moins un module d'application (14),
dans lequel le coupleur de bus (10) est conçu pour coupler l'appareil de bus (3) au bus (2) du système de bus (1) et présente plusieurs unités fonctionnelles (12),
dans lequel le coupleur de bus (10) présente une unité de détection d'activité (11) pour détecter un état d'activité sur le bus (2) du système de bus (1) et pour l'adressage plus ciblé des unités fonctionnelles (12) en fonction de l'état d'activité détecté,
**caractérisé en ce que**
l'unité de détection d'activité (11) est conçue pour détecter l'état d'activité pour détecter un octet et/ou un télégramme de bus, et dans lequel l'unité de détection d'activité (11) est conçue pour adresser les unités fonctionnelles (12) dans le coupleur de bus (10) uniquement lorsqu'elles sont nécessaires.

2. Système de bus (1) selon la revendication 1,
**caractérisé en ce que**
l'unité de détection d'activité (11) est conçue pour détecter l'état d'activité pour détecter un flanc de signal et/ou une impulsion.

3. Système de bus (1) selon l'une des revendications 1 ou 2,
**caractérisé en ce que**
le coupleur de bus (10) est conçu pour une détection continue ou au moins presque continue de l'état d'activité du système de bus (1).

4. Système de bus (1) selon au moins l'une des revendications précédentes,
**caractérisé en ce que**
le coupleur de bus (10) est conçu pour activer ou désactiver les unités fonctionnelles (12) en fonction de l'état d'activité détecté sur le bus (2).

5. Système de bus (1) selon au moins l'une des revendications précédentes,
**caractérisé en ce que** l'unité de détection d'activité (11) est conçue pour l'adressage temporisé des unités fonctionnelles (12).

6. Système de bus (1) selon au moins l'une des revendications précédentes,
**caractérisé en ce que** l'unité de détection d'activité (11) est conçue pour l'adressage des unités fonctionnelles (12) en fonction d'un statut des unités fonctionnelles (12).

7. Système de bus (1) selon la revendication 6,
**caractérisé en ce que** le coupleur de bus (10) présente au moins une interface (13) par laquelle le statut des unités fonctionnelles (12) peut être modifié.

8. Système de bus (1) selon la revendication 7,
**caractérisé en ce que** l'interface (13) est conçue pour établir une liaison vers un module d'application (14) de l'appareil de bus (3) ou vers une unité d'adressage externe.
